# EUROPEAN PATENT APPLICATION

(11) **EP 4 553 732 A1**
(43) Date of publication of application: **14.05.2025**
(21) Application number: 23208697.5
(22) Date of filing: 09.11.2023
(51) Int. Cl.: G06Q 20/02, G06Q 20/06, G06Q 20/32, G06Q 20/36, G06Q 20/38

(54) **SECURE TRANSACTION UNIT, ELECTRONIC TOKEN TRANSACTION SYSTEM, AND METHOD IN A SECURE TRANSACTION UNIT**

(71) Applicant: Giesecke+Devrient advance52 GmbH, 81677 München (DE)
(72) Inventor: Hupel, Lars, 81677 München (DE)
(74) Representative: Ter Meer Steinmeister & Partner

(57) **Abstract**

The invention relates to a secure transaction unit (STU) for use in an electronic token transaction system (TS), the secure transaction unit (STU) at least comprising: a secure element (SE); and a special secure element (SSE) for temporarily offline storing of history data related to tokens being transacted within offline token transactions; wherein the secure element (SE) comprises: a means (101) configured for receiving at least one token from another secure element (OSE) when performing an offline token transaction between the secure element (SE) and the other secure element (OSE); wherein the special secure element (SSE) comprises: a means (201) configured for receiving directly or indirectly history data related to the received at least one token from the other secure element (OSE) for temporarily offline storing history data related to token transaction performed by the secure element (SE); and means (202) configured for providing the temporarily stored history data to a token register (T-REG).

## Description

The invention relates to a secure transaction unit for use in an electronic token transaction system. The invention also refers to an electronic token transaction system. The invention also relates to a method in a secure transaction unit of an electronic token transaction system.

Tokens - also referred to as digital assets, electronic coins, coin data sets - may represent any digital asset, in particular a digital currency, preferably a central bank digital currency, short CBDC. These tokens are issued and deleted by an issuing unit of a token transaction system, such as an issuing authority, or a central bank unit or a commercial bank unit.

Payment transactions and associated payment transaction data must be safe and secure and so, means for protecting confidentiality, integrity, and availability of exchanged payment transaction data must be implemented.

In conventional electronic payment systems respectively electronic token transaction systems, tokens can directly be shared between individual payment system participants, i.e. secure elements. The token transferred within such an electronic payment system is valid upon direct receipt from another participant without a need of approval or verification via an online connection. Tokens can be modified by each individual participant, e.g., ownership of tokens can be switched from one participant to another participant (SWITCH modification), tokens can be split into plural tokens to reduce a monetary value (SPLIT modification) and/or tokens can be merged to become one token having a higher monetary value (MERGE modification).

Each modification to a token can be - but does not have to be - registered in a verification register, hereinafter also referred to as token register or verifier. This token register stores a token reference of the token but does not store the token itself to ensure anonymity in the payment system. The token register is an entity of the electronic payment transaction system but is remote to participants. Thus, the token register may be reached via online connection, e.g., an internet communication and/or well-established protocols, such as TCP, IP, UDP, HTTPS, FTP and/or other suitable.

One design aspect of such payment systems is that a token must be verifiable by each participant in the system at any time. This can be done online via the token register upon sending a registration request from the participant (i.e. via a secure element and/or a secure transaction unit).

If an online connection is not available or inconvenient or should not be used, it is still possible to use a modified token as a valid token within the electronic token transaction system. This is possible, because a token may comprise a token history, hereinafter also referred to as history data, attached to the token that protocols one or more previous modifications. So, it is necessary to generate and attach a token history entry for each modification made with the token in case a registration of that modification at the token register, e.g., via an online connection to the token register, is unavailable or inconvenient or should not be used at the time of the modification. A token history may have one or more token history entries each being referred to one modification of the token. A token history entry can also be referred to as a "proof" and/or history data.

As a drawback of known systems, the larger the token history is - meaning the more token history entries (modifications related to the token) are attached to or stored with the token itself - the more storage space and computing performance and network performance is necessary for storing, managing and/or transmitting/receiving an individual token. Furthermore, since more data needs to be processed and transmitted between individual participants, the time duration for performing a token transfer heavily increases and may lead to unwanted time-out scenarios, e.g. in wireless local payment transaction between secure elements (e.g. via NFC, Bluetooth, etc.) and/or user acceptance is lowered.

Since a secure element is a computing device with limited resources such as storage capacity and processing power, there is need to reduce the data size of a token without reducing security, flexibility, or anonymity of the electronic token respectively payment transaction system, especially in scenarios in which an online connectivity to a token register cannot or should not be established. Further, there is a need to reduce the time duration of the token transfer in order to increase the number of token transactions.

The above-identified objectives are solved with the features of the independent patent claims. Further advantageous embodiments are described in the dependent patent claims.

In an aspect of the present invention, there is provided a secure transaction unit for use in an electronic token transaction system. The secure transaction unit at least comprises a secure element and a special secure element for temporarily offline storing of history data related to tokens being transacted within offline token transactions. The secure element comprises a means configured for receiving at least one token from another secure element when performing an offline token transaction between the secure element and the other secure element. The special secure element comprises a means configured for receiving directly or indirectly history data related to the received at least one token from the other secure element for temporarily offline storing the history data related to token transaction performed by the secure element and a means configured for providing the temporarily stored history data to a token register.

In other words, this aspect includes a secure transaction unit for use in an electronic token transaction system comprising a secure element, wherein the secure element is configured for receiving at least one token from another secure element when performing an offline token transaction between the secure element and the other secure element. The secure transaction unit comprises history data related to the received at least one token, wherein the history data have to be send to a token register of the transaction system. The secure transaction unit comprises a special secure element, wherein the special secure element is configured for receiving directly or indirectly the history data from the other secure element, for temporarily storing the history data and for providing the history data to the token register.

The secure transaction unit represents any unit configured for be used in an electronic token transaction system and configured for providing respectively enabling a token transaction between two different secure elements, respectively payment participants. For instance, the secure transaction unit may be a merchant terminal, in particular a point of sale, POS, system but is not limited thereto. The secure transaction unit may comprise a secure element, e.g. in case of the merchant terminal this may be a merchant (smart) card, and a special secure element, e.g. another smart card or a secure storage unit. Both, the secure element and the special secure element are arranged fully or at least partially within the secure transaction unit. In other words, both the secure element and the special secure element are not connected to the secure transaction unit in a remote manner, e.g. via a communication network etc.. For instance, in case the secure transaction unit is a merchant terminal having a housing, both the secure element and the special secure element are fully or at least partially inserted respectively arranged within the merchant terminal, in particular within a housing of the merchant terminal.

The secure element, also referred to as secure wallet, represents any secure token management unit; token wallet; and/or wallet may be used to locally manage token in the secure element itself and/or to modify the tokens and to register the token in the electronic token transaction system. In other words, the secure element represents a participant for the token transaction. The secure element is un-hosted, so it is not hosted within another entity of the payment system, e.g. a service provider unit or the like. The secure element may comprise at least one of a means configured for providing a token transaction request to another secure element, a means configured for receiving at least one token from another secure element when performing an offline token transaction between the secure element and the other secure element, a means configured for receiving the history data from the other secure element, a means configured for providing the history data to the special secure element, a means configured for providing a registration request to the special secure element for providing the history data to the token register, and a means configured for receiving a registration response from the token register.

A special secure element represents another secure element (different from the secure element above) configured for only storing, in particular temporary storing, the history data related to a token. The special secure element is a secure element that may be configured for only storing a plurality of history data from a plurality of different secure elements. The special secure element may be un-hosted. For instance, the special secure element may have a higher level of security and/or a higher level of performance compared with a (normal, not-special) secure element. Exemplary, the special secure element comprises a higher amount of memory (storage) space and/or more computing power if compared with a (normal, not-special) secure element. The special secure element temporarily stores the history data, wherein temporarily storing herein means that the history data are stored at the special secure element for instance as long as the secure transaction unit is offline, i.e. a communication connection to the token register is not available or is not sufficient to enable a registration of the token at the token register or the secure transaction unit is in a mode (online or offline) in which sending registration requests to the token register is not enabled or wanted or not allowed. When a communication connection between the secure element and the token register is available or is sufficient to enable a registration of the token at the token register, i.e. the secure transaction unit is online or in a mode in which sending registration requests to the token register is enabled or is wanted or is allowed, the history data can be provided to the token register for the registration. In other words, a temporarily storing may only be executed when a communication connection between the secure element and the token register is insufficient or is disabled or is unwanted or is unallowed to enable a registration of the token at the token register.

In a preferred embodiment, the history data of the token of the offline transaction can be provided from the special secure element to the token register without the secure element. Thus, there is a direct (logic) communication between the special secure element and the token register without interference of the secure element of the transaction unit. There may be a direct (logic) communication between the special secure element and the token register via the transaction unit without interference of the secure element of the transaction unit.

In a preferred embodiment, the secure element may in particular be able to perform a further offline transaction with the (unregistered) token in parallel. This means that the secure element can validly perform further offline transactions with modified tokens that are not registered in the token register, wherein the tokens of this further offline transaction are without the history data.

With this aspect, it is assured that the data size of a token can be significantly reduced, e.g. when performing such further offline transactions, such that the computing power of the secure element can be relieved such that a time duration of a transmission, receipt and/or transmission of the token can be significantly decreased and the number of possible token transactions can be significantly increased.

In a preferred embodiment of the secure transaction unit, the secure transaction unit is a merchant terminal. The merchant terminal represents any payment terminal/point of sale, POS, terminal configured for providing an electronic token transaction.

In a preferred embodiment of the secure transaction unit, the secure token transaction unit or the secure element further comprises a means configured for providing a token transaction request to the other secure element. The token transaction request represents any request, any query, or any question for initiating a token transaction between the other secure element and the secure element. Additionally, the token transaction request may initiate a providing of the history data from the other secure element to the special secure element. The token transaction request may be generated by the secure element. The token transaction request is provided from the secure element to the other secure element. The token transaction request may include a string and/or an integer but is not limited thereto. For instance, the token transaction request may include an instruction like "pay" together with a value, the date, and the purpose but is not limited thereto.

These means configured for providing the token transaction request to the other secure element may be a token transaction interface of the secure transaction unit, e.g. a contact-based or contactless (local) communication interface for token transactions (token transfer) between the other secure element and the secure element.

In a preferred embodiment of the secure transaction unit, the secure element further comprises a means configured for receiving the history data from the other secure element, a means configured for providing the history data to the special secure element, and/or a means configured for providing a registration request to the special secure element for providing the history data to the token register.

The registration request represents any request, any query, or any question for providing the history data from the special secure element to the token register for the registration of the token. The registration request is provided respectively transmitted from the secure element to the special secure element. The registration request may be provided respectively generated by the secure element. The registration request, also referred to as replacement request, may be in a specific format to transfer the history data of the token to the token register. The registration request may include a string and/or an integer but is not limited thereto.

By including means configured for receiving the history data from the other secure element, a means configured for providing the history data to the special secure element, and/or a means configured for providing a registration request to the special secure element, an indirect providing of the history data related to the received at least one token from the other secure element to the special secure element can be provided.

In a preferred embodiment of the secure transaction unit, the special secure element further comprises a means configured for receiving the registration request from the transaction unit and/or the secure element.

By receiving the registration request, the special secure element initiates a transmission respectively providing of the history data to the token register. Therefore, the registration, in particular the interval of registration, of the token can be controlled.

In a preferred embodiment of the secure transaction unit, the secure element further comprises a means configured for receiving a registration response from the token register.

The registration response represents any data respectively information indicating the failure or the success of the registration respectively verification of a token. The registration response may be provided respectively generated by the token register and may be provided respectively transmitted from the token register to the secure element. For instance, the registration response may be provided as a string or integer but is not limited thereto. Exemplary, the registration response may include the term "YES" or "NO" indicating the success or the failure of the registration. For instance, the registration response may include a status-code (200 for OK, 400 for NOT OK, or 500 for SERVER ERROR) together with a hash and a signature of the request such that a secure element can validate the registration response.

By providing a registration response from the token register to the secure element, the success or failure of the registration of a token can be analyzed respectively detected such that the validity of the token can be verified, analyzed and/or indicated.

In another aspect of the invention there is provided an electronic token transaction system. The electronic token transaction system comprises a plurality of other secure elements, at least one secure transaction unit as described above, and at least one token register.

In another aspect of the invention there is provided a method in a secure transaction unit of an electronic token transaction system. The method comprises the following steps: receiving by a secure element at least one token from another secure element when performing an offline token transaction between the secure element and the other secure element, receiving by a special secure element history data directly or indirectly from the other secure element for temporarily offline storing the history data related to token transaction performed by the secure element, providing the history data for a registration from the special secure element to a token register of the electronic token transaction system.

In a preferred embodiment of the method, when the received history data are indirectly provided to the special secure element, the method further comprises the steps of: receiving history data by the secure element from the other secure element; and providing the received history data from the secure element to the special secure element.

In a preferred embodiment of the method, the method further comprises the step of: providing a registration request from the secure element to the special secure element; and/or receiving by the secure element a registration response from the token register; and/or providing a token transaction request from a secure element to another secure element.

In the following, the invention or further embodiments and advantages of the invention are explained in more detail based on drawings, wherein the drawings describe only embodiments of the invention. Identical components in the drawings are given the same reference signs. Elements drawn with dashed lines are considered as optional elements.

The drawings are not to be regarded as true to scale, and individual elements of the drawings may be shown in exaggeratedly large or exaggeratedly simplified form.
Fig. 1 shows an exemplary embodiment of a secure transaction unit.
Fig. 2 shows an exemplary embodiment of an electronic token transaction system.
Fig. 3 shows an exemplary embodiment of a method in a secure transaction unit of an electronic token transaction system in which the history data are directly provided to the special secure element.
Fig. 4 shows an exemplary embodiment of a method in a secure transaction unit of an electronic token transaction system in which the history data are indirectly provided to the special secure element.

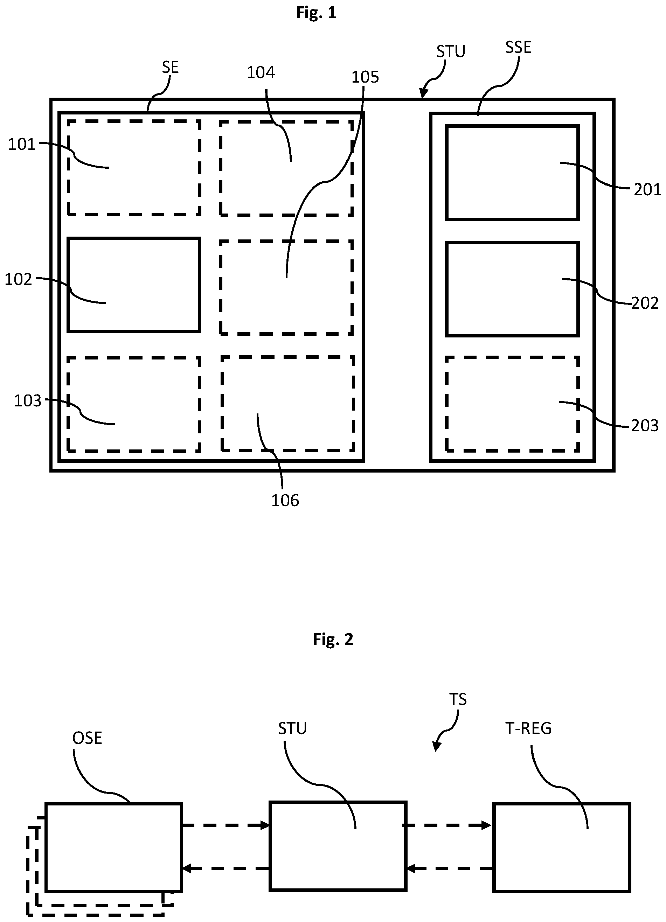

In Fig. 1, an exemplary embodiment of a secure transaction unit is depicted. The secure transaction unit STU for use in an electronic token transaction system TS comprises a secure element SE and a special secure element SSE. The special secure element SSE is configured for temporarily, i.e. as long as a connection of the secure element and the token register is not sufficient to provide a registration of the token, offline storing of history data related to tokens being transacted within offline token transactions. Both, the secure element SE and the special secure element SSE are fully included respectively arranged within the secure transaction unit STU. The secure element SE comprises a means 102 configured for receiving at least one token from another secure element OSE when performing an offline token transaction between the secure element SE and the other secure element OSE. The special secure element SSE comprises a means 201 configured for receiving directly or indirectly the history data related to the received at least one token from the other secure element OSE for temporarily offline storing history data related to token transaction performed by the secure element SE and a means 202 configured for providing the temporarily stored history data to a token register T-REG. By this secure transaction unit the data size of a token can be significantly reduced, e.g. when performing such further offline transactions, such that the computing power of the secure element can be relieved such that a time duration of a transmission, receipt and/or transmission of the token can be significantly decreased and the number of possible token transactions can be significantly increased.

Optionally, the secure element SE further comprises a means 101 configured for providing a token transaction request to another secure element OSE.

Optionally, the secure element SE further comprises a means 103 configured for receiving the history data from the other secure element OSE, a means 104 configured for providing the history data to the special secure element SSE, and/or a means 105 configured for providing a registration request to the special secure element SSE for providing the history data to the token register T-REG.

Optionally, the special secure element SSE further comprises a means 203 configured for receiving the registration request from the secure element SE.

Optionally, the secure element SE further comprises a means 106 configured for receiving a registration response from the token register T-REG.

In Fig. 2, an exemplary embodiment of an electronic token transaction system is depicted. The electronic token transaction system TS comprises a plurality of other secure elements OSE, at least one secure transaction unit STU as described above, and at least one token register T-REG. The plurality of other secure elements OSE, the at least one secure transaction unit STU, and the at least one token register T-REG are communicatively coupled to each other. The plurality of other secure elements OSE, the at least one secure transaction unit STU and the at least one token register T-REG are spaced apart from each other.

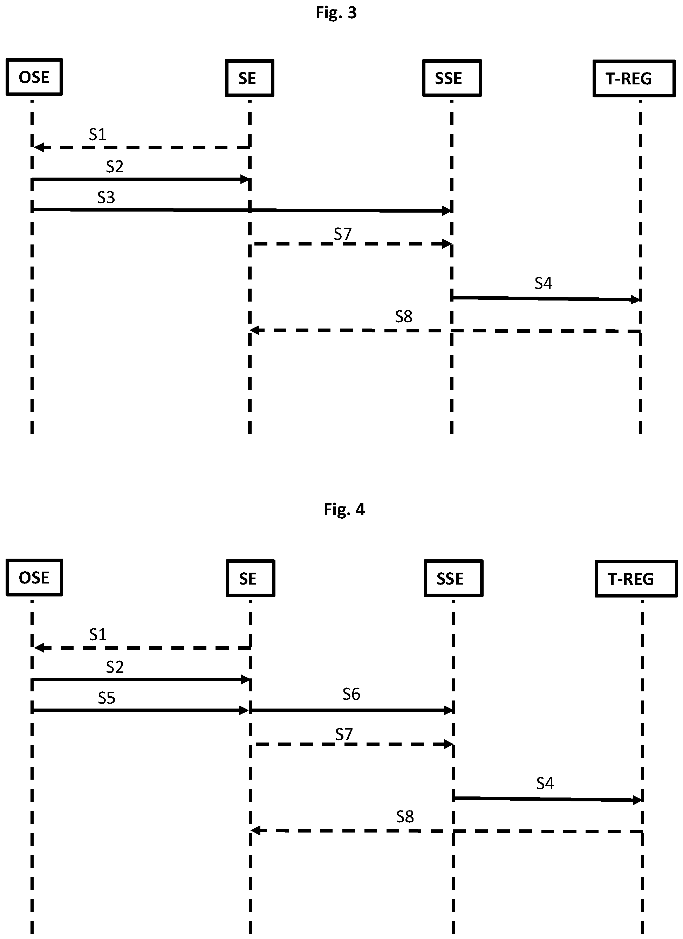

In Fig. 3, an exemplary embodiment of a method in a secure transaction unit of an electronic token transaction system in which the history data are directly provided from the other secure element to the special secure element. The method comprises the following steps: receiving S2 by a secure element SE at least one token from another secure element OSE when performing an offline token transaction between the secure element SE and the other secure element OSE, receiving S3 by a special secure element SSE history data directly or indirectly from the other secure element OSE for temporarily offline storing the history data related to token transaction performed by the secure element SE, providing S4 the history data for a registration from the special secure element SSE to a token register T-REG of the electronic token transaction system TS.

Optionally, the method further comprises at least one of the following steps: providing S7 a registration request from the secure element SE to the special secure element SSE, receiving S8 by the secure element SE a registration response from the token register T-REG, and providing S1 a token transaction request from a secure element SE to another secure element OSE.

In Fig. 4, an exemplary embodiment of a method in a secure transaction unit of an electronic token transaction system in which the history data are indirectly provided from the other secure element to the special secure element. The method comprises the following steps: receiving S2 by a secure element SE at least one token from another secure element OSE when performing an offline token transaction between the secure element SE and the other secure element OSE, receiving S5 by the secure element SE history data from the other secure element OSE, providing S6 the received history data from the secure element SE to the special secure element SSE, receiving by the special secure element SSE history data directly or indirectly from the secure element SE for temporarily offline storing the history data related to token transaction performed by the secure element SE, providing S4 the history data for a registration from the special secure element SSE to a token register T-REG of the electronic token transaction system TS.

Optionally, the method further comprises at least one of the following steps: providing S7 a registration request from the secure element SE to the special secure element SSE, receiving S8 by the secure element SE a registration response from the token register T-REG, and providing S1 a token transaction request from a secure element SE to another secure element OSE.

### REFERENCE SIGNS

- STU: Secure transaction unit
- SE: Secure element
- TS: Electronic token transaction system
- SSE: Special secure element
- OSE: Other secure element
- T-REG: Token register
- 101: Means
- 102: Means
- 103: Means
- 104: Means
- 105: Means
- 106: Means
- 201: Means
- 202: Means
- 203: Means
- S1: Step 1
- S2: Step 2
- S3: Step 3
- S4: Step 4
- S5: Step 5
- S6: Step 6
- S7: Step 7
- S8: Step 8

## Claims

1. Secure transaction unit (STU) for use in an electronic token transaction system (TS), the secure transaction unit (STU) at least comprising:
a secure element (SE); and
a special secure element (SSE) for temporarily offline storing of history data related to tokens being transacted within offline token transactions; wherein the secure element (SE) comprises:
a means (102) configured for receiving at least one token from another secure element (OSE) when performing an offline token transaction between the secure element (SE) and the other secure element (OSE);
wherein the special secure element (SSE) comprises:
a means (201) configured for receiving directly or indirectly the history data related to the received at least one token from the other secure element (OSE) for temporarily offline storing history data related to token transaction performed by the secure element (SE); and
a means (202) configured for providing the temporarily stored history data to a token register (T-REG).

2. The secure transaction unit (STU) according to claim 1, wherein the secure transaction unit (STU) is a merchant terminal.

3. The secure transaction unit (STU) according to claim 1, wherein the secure token transaction unit (STU) or the secure element (SE) further comprises:
a means (101) configured for providing a token transaction request to the other secure element (OSE).

4. The secure transaction unit (STU) according to any preceding claims, wherein the secure element (SE) further comprises:
a means (103) configured for receiving the history data from the other secure element (OSE);
a means (104) configured for providing the history data to the special secure element (SSE), and/or
a means (105) configured for providing a registration request to the special secure element (SSE) for providing the history data to the token register (T-REG).

5. The secure transaction unit (STU) according to claim 4, wherein the special secure element (SSE) further comprises:
a means (203) configured for receiving the registration request from the secure transaction unit (STU) or the secure element (SE).

6. The secure transaction unit (STU) according to any preceding claims, wherein the secure element (SE) further comprises:
a means (106) configured for receiving a registration response from the token register (T-REG).

7. An electronic token transaction system (TS) comprising:
a plurality of other secure elements (OSE);
at least one secure transaction unit (STU) according to claims 1 to 7, and
at least one token register (T-REG).

8. A method in a secure transaction unit (STU) of an electronic token transaction system (TS), the method comprises the following steps:
receiving (S2) by a secure element (SE) at least one token from another secure element (OSE) when performing an offline token transaction between the secure element (SE) and the other secure element (OSE) ;
receiving (S3) by a special secure element (SSE) history data directly or indirectly from the other secure element (OSE) for temporarily offline storing the history data related to token transaction performed by the secure element (SE);
providing (S8) the history data for a registration from the special secure element (SSE) to a token register (T-REG) of the electronic token transaction system (TS).

9. Method according to claim 8, when the received history data are indirectly provided to the special secure element (SSE), the method further comprises the steps of:
receiving (S5) history data by the secure element (SE) from the other secure element (OSE); and
providing (S6) the received history data from the secure element (SE) to the special secure element (SSE).

10. Method according to claims 8 or 9, further comprising the step of:
providing (S7) a registration request from the secure element (SE) to the special secure element (SSE); and/or
receiving (S8) by the secure element (SE) a registration response from the token register (T-REG); and/or
providing (S1) a token transaction request from a secure element (SE) to another secure element (OSE).

## Amended claims

### Amended claims in accordance with Rule 137(2) EPC.

1. Secure transaction unit (STU) for use in an electronic token transaction system (TS), the secure transaction unit (STU) at least comprising:
a secure element (SE); and
a special secure element (SSE) for temporarily offline storing of history data related to tokens being transacted within offline token transactions; wherein the secure element (SE) comprises:
a means (102) configured for receiving at least one token from another secure element (OSE) when performing an offline token transaction between the secure element (SE) and the other secure element (OSE);
wherein the special secure element (SSE) comprises:
a means (201) configured for receiving directly or indirectly the history data related to the received at least one token from the other secure element (OSE) for temporarily offline storing history data related to token transaction performed by the secure element (SE); and
a means (202) configured for providing the temporarily stored history data to a token register (T-REG) for a registration of a token.

2. The secure transaction unit (STU) according to claim 1, wherein the secure transaction unit (STU) is a merchant terminal.

3. The secure transaction unit (STU) according to claim 1, wherein the secure token transaction unit (STU) or the secure element (SE) further comprises:
a means (101) configured for providing a token transaction request to the other secure element (OSE).

4. The secure transaction unit (STU) according to any preceding claims, wherein the secure element (SE) further comprises:
a means (103) configured for receiving the history data from the other secure element (OSE);
a means (104) configured for providing the history data to the special secure element (SSE), and/or
a means (105) configured for providing a registration request to the special secure element (SSE) for providing the history data to the token register (T-REG).

5. The secure transaction unit (STU) according to claim 4, wherein the special secure element (SSE) further comprises:
a means (203) configured for receiving the registration request from the secure transaction unit (STU) or the secure element (SE).

6. The secure transaction unit (STU) according to any preceding claims, wherein the secure element (SE) further comprises:
a means (106) configured for receiving a registration response from the token register (T-REG).

7. An electronic token transaction system (TS) comprising:
a plurality of other secure elements (OSE);
at least one secure transaction unit (STU) according to claims 1 to 6, and
at least one token register (T-REG).

8. A method in a secure transaction unit (STU) of an electronic token transaction system (TS), the method comprises the following steps:
receiving (S2) by a secure element (SE) at least one token from another secure element (OSE) when performing an offline token transaction between the secure element (SE) and the other secure element (OSE) ;
receiving (S3) by a special secure element (SSE) history data directly or indirectly from the other secure element (OSE) for temporarily offline storing the history data related to token transaction performed by the secure element (SE);
providing (S4) the history data for a registration from the special secure element (SSE) to a token register (T-REG) for a registration of a token of the electronic token transaction system (TS).

9. Method according to claim 8, when the received history data are indirectly provided to the special secure element (SSE), the method further comprises the steps of:
receiving (S5) history data by the secure element (SE) from the other secure element (OSE); and
providing (S6) the received history data from the secure element (SE) to the special secure element (SSE).

10. Method according to claims 8 or 9, further comprising the step of:
providing (S7) a registration request from the secure element (SE) to the special secure element (SSE); and/or
receiving (S8) by the secure element (SE) a registration response from the token register (T-REG); and/or
providing (S1) a token transaction request from a secure element (SE) to another secure element (OSE).
